# EUROPÄISCHE PATENTSCHRIFT

(11) **EP 0 838 370 B1**
(45) Veröffentlichungstag und Bekanntmachung des Hinweises auf die Patenterteilung: **23.07.2003**
(21) Anmeldenummer: 97115522.1
(22) Anmeldetag: 08.09.1997
(51) Int. Cl.: B60Q 1/30, B60Q 1/04

(54) **Fahrzeugleuchte oder -scheinwerfer**
Vehicle light or headlight
Feu ou phare de véhicule

(30) Priorität: 23.10.1996 DE 19643766
(43) Veröffentlichungstag der Anmeldung: 29.04.1998
(73) Patentinhaber: Volkswagen Aktiengesellschaft, 38436 Wolfsburg (DE)
(72) Erfinder: Müller, Michael, 38518 Gifhorn (DE)
(74) Vertreter: Meyer, Enno, Dr.

(56) Entgegenhaltungen:
- EP-A- 0 751 040
- DE-C- 19 511 137
- FR-A- 899 047

## Beschreibung

Die Erfindung betrifft eine Vorrichtung zur Befestigung einer Leuchte oder eines Scheinwerfers, insbesondere einer Zusatzbremsleuchte, eines Kraftfahrzeuges an einem Fahrzeugteil, wobei die Leuchte oder der Scheinwerfer in einer Öffnung des Fahrzeugteiles angeordnet ist und ein Befestigungsmittel aufweist.

In der deutschen Patentschrift DE 35 38 361 C1 ist die Befestigung einer Zusatzbremsleuchte auf einer Hutablage eines Kraftfahrzeuges beschrieben. Die Befestigung erfolgt hier auf einem Sockel mit Schrauben. Zum einen ist die Befestigungsvorrichtung verhältnismäßig aufwendig und andererseits ist für die Montage ein Werkzeug erforderlich.

Es sind auch Befestigungsvorrichtungen für hochgesetzte Bremsleuchten mittels eines Gestänges zwischen Hutablage und Fahrzeughimmel hinter der Heckscheibe eines Kraftfahrzeuges bekannt. Derartige Konstruktionen stören zum einen das Sichtfeld des Fahrers durch die Heckscheibe und stören zum anderen beim Ablegen von Gegenständen auf der Hutablage.

Die gattungs bildende DE 195 11 137 C1 zeigt eine Leuchte, die mehrere Verbindungselemente aufweist, wobei die Verbindungselemente einerseits zum Verrasten des Leuchtengehäuses mit der Lichtscheibe und andererseits zum Verrasten der so zusammengesetzten Leuchte mit der Fahrzeugkarrosserie dienen. Dabei weisen die Verbindungselemente je ein Federelement auf, so daß die Leuchte durch Federkraft mehrerer Verbindungselemente in einer Karosserieöffnung gehalten wird. Nachteilig bei dem Verwenden derartiger Verbindungselemente ist, daß durch das Verrasten des Leuchtengehäuses mit der Leuchtscheibe durch ein Rastmittel des Verbindungselements eine lösbare Verbindung geschaffen wird, die durch Materialermüdung sich öffnen kann, so daß die Halterung der Leuchte nicht mehr gewährleistet ist. Weiterhin ist die Handhabung des Befestigungsmittels umständlich.

FR 899 047 A zeigt ein Kraftfahrzeugleuchte mit einem Befestigungsmittel, das die Leuchte ebenfalls durch Federkraft in einer Karosserieöffnung hält. Die Federkraft wird durch eine Schraubenfeder bewirkt, die innerhalb des Leuchtengehäuses angeordnet ist, wobei die Feder durch eine exzentrischen Spanner gespannt und an einem Karosserieelement festgelegt wird, wodurch die Leuchte in der Öffnung der Karosserie gehaltert wird. Nachteilig ist die umständliche Handhabung des Exzenters.

Der Erfindung liegt daher die Aufgabe zugrunde, eine Kraftfahrzeugleuchte mit einem Befestigungsmittel zu schaffen, die in einfachster Weise in eine Öffnung einer Fahrzeugkarosserie montierbar ist.

Diese Aufgabe wird durch die Merkmale des Patentanspruchs 1 gelöst. Bevorzugte Ausgestaltungen der Erfindung sind Gegenstand der Unteransprüche.

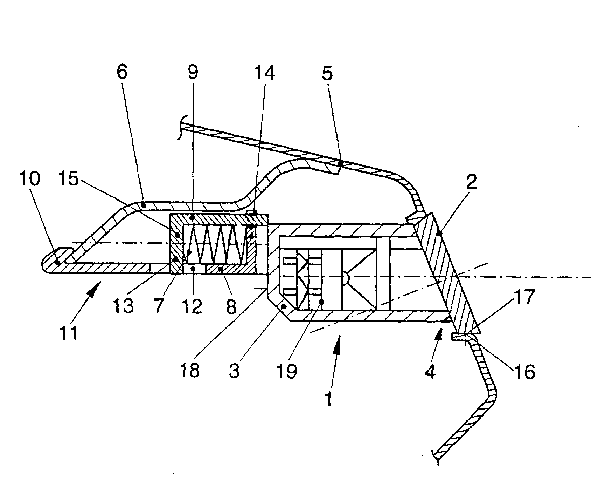

Die Erfindung wird im folgenden anhand eines Ausführungsbeispieles näher erläutert. Die Zeichnung zeigt:
Figur: Vorrichtung zum Befestigen einer Leuchte oder eines Scheinwerfers

In der Figur ist eine Leuchte 1 mit einer Uchtscheibe 2 und einem Gehäuse 3 zu erkennen. Die Leuchte 1 kann jedoch auch einteilig ausgeführt sein. In der Leuchte 1 ist eine Leuchtdiode 19 angeordnet. Derartige Leuchtdioden sind sehr zuverlässig und müssen sehr selten ausgewechselt werden. Die Leuchte 1 mit der Leuchtdiode 19 kann deshalb auch in Bereichen angeordnet werden, die nach der Montage der Leuchte 1 schwer zugänglich sind.

Die größte Erstreckung der Leuchte 1 in der Ebene der Öffnung 4 ist größer als die kleinste Erstreckung der Öffnung 4. Damit wird zumindest in einer Stellung der Leuchte 1 ein Durchrutschen der Leuchte 1 durch die Öffnung 4 verhindert.

An der zum Fahrzeuginnenraum zeigenden Wand 18 der Leuchte 1 ist das Befestigungsmittel 11 angeordnet. Das Befestigungsmittel 11 ist zweiteilig ausgeführt wobei ein Teil 9 des Befestigungsmittels 11 fest an der Leuchte 1 angeordnet ist und ein Teil 8 des Befestigungsmittels 11 bewegbar zu der Leuchte 1 ausgeführt ist. Zwischen beiden Teilen des Befestigungsmittels 11 ist das Federmittel 7 angeordnet. Das Federmittel 7 ist eine auf Druck beanspruchte Schraubenfeder, die an ihren Stirnseiten an den senkrecht zu dem Federweg verlaufenden Aufnahmen 14 und 15 anliegt. Das Federmittel 7 wird seitlich von den Teilen 8 und 9 des Befestigungsmittels 11 begrenzt und kann dadurch nicht ausknicken. In dem Teil 8 des Befestigungsmittels 11 ist ein Langloch 12 vorgesehen, in das das Ende 13 der Aufnahme 15 hineinragt.

An dem Fahrzeugteil 5 ist ein zur Befestigung der Leuchte 1 vorgesehener Befestigungsansatz 6 vorgesehen. Das Teil 8 des Befestigungsmittels 11 weist an seinem dem Befestigungsansatz 6 zugewandten Ende einen als Rastmittel (10) ausgebildeten Haken auf. Das Ende 13 der Aufnahme 15 kann in einem einzigen Handgriff mit dem Teil 8 des Befestigungsmittels 11 ergriffen werden und derart zusammengedrückt werden, daß der Haken 10 des Teils 8 hinter dem Ende des Befestigungsansatzes 6 eingehakt werden kann.

Nach dem Einhaken drückt das Federmittel 7 die Teile 8 und 9 des Befestigungsmittels 11 auseinander und erzeugt dadurch die Federkraft, wodurch die Leuchte 1 zwischen der Öffnung 4 und dem Befestigungsansatz 6 gehalten wird.

Die randseitige Fläche 16 verläuft im wesentlichen parallel zu der Fläche 17 der Öffnung 4 und schräg zu der Kraftwirkungsrichtung des Federmittels 7. Die Fläche 17 wirkt dadurch als Wiederlager zu der angreifenden Federkraft des Federmittels 7 und verhindert ein Durchrutschen der Leuchte 1 durch die Öffnung 4. Weiterhin ist dadurch ein guter Sitz der Leuchte 1 in der Öffnung 4 gegeben.

Zwischen den Flächen 16 und der Fläche 17 kann ein Dichtmittel vorgesehen werden, wodurch ein Eindringen von Schmutz oder Feuchtigkeit von außen in den Fahrzeuginnenraum verhindert wird.

Das Befestigungsmittel 11 ist so dimensioniert und derart angeordnet das es gemeinsam mit der Leuchte 1 durch die Öffnung 4 eingeführt werden kann und anschließend durch einen einfachen Handgriff an dem Befestigungsansatz 6 mit dem Haken 10 befestigt werden kann.

Liegt der Befestigungsansatz 6 an einer schwer zugänglichen Stelle so ist es auch denkbar, daß das Befestigungsmittel 11 schwenkbar an der Leuchte 1 angeordnet ist. In diesem Fall ist es zweckmäßig der Leuchte 1, dem Befestigungsmittel 1 oder dem Befestigungsansatz 6 einen Anschlag zuzuordnen, der die Auslenkung des Befestigungsmittels 11 gegenüber der Leuchte 1 begrenzt. Das Befestigungsmittel 11 schwenkt dann nach dem Einführen in die durch den Anschlag definierten Stellung und kann dort an einem vorgesehenen Befestigungsansatz befestigt werden.

Sind in einer Leuchte 1 mehrere Leuchtdioden 7 angeordnet, d. h. die Leuchte 1 hat z. B. eine längliche Form, dann sind einer Leuchte 1 zweckmäßgierweise mehrere Befestigungsmittel 11 zugeordnet. Alternativ kann das Befestigungsmittel 11 auch an die Form der Leuchte 1 angepaßt sein und mehrere Federmittel 7 enthalten.

### BEZUGSZEICHENLISTE

- 1: Leuchte
- 2: Lichtscheibe
- 3: Gehäuse
- 4: Öffnung
- 5: Fahrzeugteil
- 6: Befestigungsansatz
- 7: Federmittel
- 8;9: Teile des Befestigungsmittels
- 10: Rastmittel, Haken
- 11: Befestigungsmittel
- 12: Langloch
- 13: Ende
- 14;15: Aufnahmen
- 16;17: Fläche
- 18: Wand
- 19: Leuchtdiode

## Patentansprüche

1. Kraftfahrzeugleuchte (1), insbesondere Zusatzbremsleuchte oder Scheinwerfers, die ein Befestigungsmittel (11) aufweist, wobei die Kraftfahrzeugleuchte (1) in einer Öffnung eines Fahrzeugteiles (5) an ordenbar ist, und durch zwischen einem von der Öffnung (4) beabstandet am Fahrzeugteil (5) angeordneten Befestigungsansatz (6) und dem die Öffnung (4) aufweisenden Fahrzeugteil (5) wirkende Federkräfte in der Öffnung (4) des Fahrzeugteiles (5) haltbar ist, wobei mindestens ein Teil (9) des Befestigungsmittels (11) fest an der Leuchte (1) angeordnet ist und mindestens ein Teil (8) des Befestigungsmittels (11) bewegbar zu der Leuchte (1) ausgebildet ist, das Befestigungsmittel (11) die Federkräfte erzeugende Federmittel (7) aufweist, und das Befestigungsmittel (11) oder ein Teil (8) des Befestigungsmittels (11) an seinem dem Befestigungsansatz (6) zugewandten Ende ein Rastmittel (10) aufweist, **dadurch gekennzeichnet, daß** das Befestigungsmittel (11) mindestens zweiteilig ausgebildet ist, das Federmittel (7) zwischen zwei Teilen (8) und (9) des Befestigungsmittels (11) angeordnet ist und das Federmittel (7) auf Druck beansprucht wird.

2. Vorrichtung nach Anspruch 1, **dadurch gekennzeichnet, daß** die größte Erstreckung der Leuchte (1) in der Ebene der Öffnung (4) größer als die kleinste Erstreckung der Öffnung (4) ist und dadurch ein Durchrutschen der Leuchte (1) verhinderbar ist.

3. Vorrichtung nach einem der vorangegangenen Ansprüche, **dadurch gekennzeichnet, daß** das Federmittel (7) seitlich und im wesentlichen parallel zu seiner Federrichtung durch zumindest ein Teil (8;9) des Befestigungsmittels (11) begrenzt ist und dadurch das Ausknicken des Federmittels (7) begrenzbar ist.

4. Vorrichtung nach einem der vorangegangenen Ansprüche, **dadurch gekennzeichnet, daß** mindestens ein Teil (8) des Befestigungsmittels (11) ein Langloch (12) aufweist, und daß das Ende (13) des jeweils anderen Teils (9) in dieses Langloch eingreift.

5. Vorrichtung nach einem der vorangegangenen Ansprüche, **dadurch gekennzeichnet, daß** die Teile (8;9) des Befestigungsmittels (11) im wesentlichen senkrecht zu dem Federweg der Federmittel (7) verlaufende Aufnahmen (14;15) aufweisen.

6. Vorrichtung nach einem der vorangegangenen Ansprüche, **dadurch gekennzeichnet, daß** die Leuchte (1) eine randseitige Fläche (16) aufweist, und die randseitige Fläche (16) im wesentlichen parallel zu einer Fläche (17) der Öffnung (4) des Fahrzeugteiles (5) und schräg zu der Kraftwirkungsrichtung des Federmittels (7) verläuft.

7. Vorrichtung nach Anspruch 6, **dadurch gekennzeichnet, daß** zwischen der randseitigen Fläche (16) und der Fläche (17) ein Dichtmittel vorgesehen ist.

8. Vorrichtung nach einem der vorangegangenen Ansprüche, **dadurch gekennzeichnet, daß** das Befestigungsmittels (11) mit der Leuchte (1) in die Öffnung (4) des Fahrzeugteiles (5) einführbar ist.

9. Vorrichtung nach einem der vorangegangenen Ansprüche, **dadurch gekennzeichnet, daß** das Befestigungsmittel (11) schwenkbar an der Leuchte (1) angeordnet ist.

10. Vorrichtung nach Anspruch 9, **dadurch gekennzeichnet, daß** Mittel vorgesehen sind, mit denen die Auslenkung des Befestigungsmittels (11) gegenüber der Leuchte (1) begrenzbar ist.

11. Vorrichtung nach Anspruch 10, **dadurch gekennzeichnet, daß** die Mittel ein der Leuchte (1), dem Befestigungsmittel (11) oder dem Befestigungsansatz (6) zugeordneter Anschlag ist.

12. Vorrichtung nach einem der vorangegangenen Ansprüche, **dadurch gekennzeichnet, daß** einer Leuchte (1) mehrere Befestigungsmittel (11) zugeordnet sind.

13. Vorrichtung nach einem der vorangegangenen Ansprüche, **dadurch gekennzeichnet, daß** einem Befestigungsmittel (11) mehrere Federmittel (7) zugeordnet sind.

## Claims

1. Motor vehicle light (1), in particular additional brake light or headlight, which has a fastening means (11), it being possible for the motor vehicle light (1) to be arranged in an opening in a vehicle part (5), and for it to be held in the opening (4) in the vehicle part (5) by spring forces acting between a fastening attachment (6), which is arranged on the vehicle part (5) at a distance from the opening (4), and the vehicle part (5) having the opening (4), at least part (9) of the fastening means (11) being arranged fixedly on the light (1) and at least part (8) of the fastening means (11) being designed such that it can move relative to the light (1), the fastening means (11) having spring means (7) producing the spring forces, and the fastening means (11) or part (8) of the fastening means (11) having a latching means (10) at its end which faces the fastening attachment (6), **characterized in that** the fastening means (11) is at least of two-part design, the spring means (7) is arranged between two parts (8) and (9) of the fastening means (11) and the spring means (7) is subject to compressive stress.

2. Device according to Claim 1, **characterized in that** the greatest extent of the light (1) in the plane of the opening (4) is greater than the smallest extent of the opening (4) and, as a result, the light (1) can be prevented from slipping through.

3. Device according to one of the preceding claims, **characterized in that** the spring means (7) is bounded laterally and essentially parallel to its spring direction by at least one part (8; 9) of the fastening means (11) and, as a result, the buckling of the spring means (7) can be restricted.

4. Device according to one of the preceding claims, **characterized in that** at least part (8) of the fastening means (11) has a slot (12), and **in that** the end (13) of the other part (9) in each case engages in this slot.

5. Device according to one of the preceding claims, **characterized in that** the parts (8; 9) of the fastening means (11) have holders (14; 15) running essentially perpendicularly with respect to the spring travel of the spring means (7).

6. Device according to one of the preceding claims, **characterized in that** the light (1) has an edge surface (16), and the edge surface (16) runs essentially parallel to a surface (17) of the opening (4) in the vehicle part (5) and obliquely with respect to the direction of action of force of the spring means (7).

7. Device according to Claim 6, **characterized in that** a sealing means is provided between the edge surface (16) and the surface (17).

8. Device according to one of the preceding claims, **characterized in that** the fastening means (11) can be introduced together with the light (1) into the opening (4) in the vehicle part (5).

9. Device according to one of the preceding claims, **characterized in that** the fastening means (11) is arranged pivotably on the light (1).

10. Device according to Claim 9, **characterized in that** means are provided which can be used to restrict the deflection of the fastening means (11) relative to the light (1).

11. Device according to Claim 10, **characterized in that** the means are a stop assigned to the light (1), the fastening means (11) or the fastening attachment (6).

12. Device according to one of the preceding claims, **characterized in that** a plurality of fastening means (11) are assigned to a light (1).

13. Device according to one of the preceding claims, **characterized in that** a plurality of spring means (7) are assigned to a fastening means (11).

## Revendications

1. Feu de véhicule automobile (1), notamment feu de freinage supplémentaire ou phare, qui présente un moyen de fixation (11), le feu de véhicule automobile (1) pouvant être installé dans un orifice d'une pièce de véhicule (5) et être maintenu par des forces de ressort agissant entre une embase de fixation (6) disposée à distance de l'orifice (4) sur la pièce de véhicule et la pièce de véhicule (5) présentant l'orifice (4) dans l'orifice (4) de la pièce de véhicule (5), au moins une partie (9) du moyen de fixation (11) étant disposée fixement sur le feu (1) et au moins une partie (8) du moyen de fixation (11) étant réalisée mobile par rapport au feu (1), le moyen de fixation (11) comprenant les moyens résilients (7) générant les forces de ressort, et le moyen de fixation (21) ou une partie (8) du moyen de fixation (11) présentant, à son extrémité tournée vers l'embase de fixation (6), un moyen d'encliquetage (10), **caractérisé en ce que** le moyen de fixation (11) est formé d'au moins deux parties, que le moyen résilient (7) est disposé entre les deux parties (8) et (9) du moyen de fixation (11) et que le moyen résilient (7) est sollicité à la pression.

2. Dispositif selon la revendication 1, **caractérisé en ce que** la plus grande extension du feu (1) dans le plan de l'orifice (4) est supérieure à la plus petite extension de l'orifice (4) et qu'on peut ainsi empêcher un glissement du feu (1).

3. Dispositif selon l'une quelconque des revendications précédentes, **caractérisé en ce que** le moyen résilient (7) est limité latéralement et substantiellement parallèlement à son sens de résilience par au moins une partie (8 ; 9) du moyen de fixation (11) et permet ainsi de limiter le repli vers l'extérieur du moyen résilient (7).

4. Dispositif selon l'une quelconque des revendications précédentes, **caractérisé en ce qu'**au moins une partie (8) du moyen de fixation (11) présente un trou oblong (12) et que l'extrémité (13) de l'autre partie respective (9) s'engrène dans ce trou oblong.

5. Dispositif selon l'une quelconque des revendications précédentes, **caractérisé en ce que** les parties (8 ; 9) du moyen de fixation (11) présentent des supports (14 ; 15) s'étendant substantiellement perpendiculairement à la course de résilience des moyens résilients (7).

6. Dispositif selon l'une quelconque des revendications précédentes, **caractérisé en ce que** le feu (1) présente une surface du côté du bord (16) et que la surface du côté du bord (16) s'étend substantiellement parallèlement à une surface (17) de l'orifice (4) de la pièce de véhicule (5) et en biais par rapport au sens d'effet de la force du moyen résilient (7).

7. Dispositif selon la revendication 6, **caractérisé en ce qu'**entre la surface du côté du bord (16) et la surface (17), un moyen d'étanchéité est prévu.

8. Dispositif selon l'une quelconque des revendications précédentes, **caractérisé en ce que** le moyen de fixation (11) peut être introduit avec le feu (1) dans l'orifice (4) de la pièce de véhicule (5).

9. Dispositif selon l'une quelconque des revendications précédentes, **caractérisé en ce que** le moyen de fixation (11) est installé de manière pivotable sur le feu (1).

10. Dispositif selon la revendication 9, **caractérisé en ce que** sont prévus des moyens qui permettent de limiter la déviation du moyen de fixation (11) par rapport au feu (1).

11. Dispositif selon la revendication 10, **caractérisé en ce que** les moyens sont une butée associée au feu (1), au moyen de fixation (11) ou à l'embase de fixation (6).

12. Dispositif selon l'une quelconque des revendications précédentes, **caractérisé en ce qu'**à un feu (1) sont associés plusieurs moyens de fixation (11).

13. Dispositif selon l'une quelconque des revendications précédentes, **caractérisé en ce qu'**à un moyen de fixation (11) sont associés plusieurs moyens résilients (7).
